(19) Europäisches Patentamt
European Patent Office
Office européen des brevets

(11) **EP 4 564 240 A1**

(12) **EUROPEAN PATENT APPLICATION**
published in accordance with Art. 153(4) EPC

(43) Date of publication:
**04.06.2025 Bulletin 2025/23**

(51) International Patent Classification (IPC):
**G06N 10/60** (2022.01)   **G06N 10/40** (2022.01)

(21) Application number: **23845489.6**

(22) Date of filing: **24.07.2023**

(86) International application number:
**PCT/CN2023/108851**

(87) International publication number:
**WO 2024/022279 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2022 CN 202210878011**

(71) Applicant: **Alibaba Damo (hangzhou) Technology Co., Ltd.**
**Hangzhou Zhejiang 310023 (CN)**

(72) Inventors:
• **WU, Feng**
**Hangzhou, Zhejiang 311121 (CN)**
• **MA, Xizheng**
**Hangzhou, Zhejiang 311121 (CN)**
• **ZHANG, Gengyan**
**Hangzhou, Zhejiang 311121 (CN)**
• **CHEN, Jianjun**
**Hangzhou, Zhejiang 311121 (CN)**
• **XIA, Tian**
**Hangzhou, Zhejiang 311121 (CN)**
• **ZHAO, Huihai**
**Beijing 100102 (CN)**

(74) Representative: **Novagraaf Technologies**
**2 rue Sarah Bernhardt**
**CS90017**
**92665 Asnières-sur-Seine Cedex (FR)**

(54) **TWO-QUBIT GATE IMPLEMENTING METHOD AND CIRCUIT, QUANTUM DEVICE, AND QUANTUM CHIP**

(57)   Disclosed are a method and a circuit for implementing a two-qubit gate, a quantum device, and a quantum chip. The method includes: applying a first quantum control signal to a first data qubit; applying a second quantum control signal to a second data qubit; and activating, by means of adjusting the first quantum control signal and the second quantum control signal, longitudinal coupling between the first data qubit and the second data qubit within a predetermined time, so as to implement the two-qubit gate. The present disclosure solves the technical problem in the related art of low precision of the two-qubit gate.

Fig. 1

```
A first quantum control signal is applied to a first data
qubit                                                    — S102
        ↓
A second quantum control signal is applied to a
second data qubit                                        — S104
        ↓
By means of adjusting the first quantum control signal
and the second quantum control signal, longitudinal
coupling between the first data qubit and the second
data qubit is activated within a predetermined time,     — S106
so as to implement a two-qubit gate
```

## Description

The present application claims priority to Chinese Patent Application No. 202210878011.4, filed to the China National Intellectual Property Administration on July, 25, 2022 and entitled "Method and Circuit for Implementing Two-Qubit Gate, Quantum Device, and Quantum Chip", the disclosure of which is hereby incorporated by reference in its entirety.

## Technical Field

The present disclosure relates to the field of quantum computing, and in particular, to a method and a circuit for implementing a two-qubit gate, a quantum device, and a quantum chip.

## Background

In the related art, there is a method of performing qubit coupling by using a capacitor to construct a two-qubit gate. However, due to the properties of a qubit, the two-qubit gate obtained by this method is not ideal and the precision is not high enough.

Therefore, in the related art, there is a technical problem of low precision of the two-qubit gate.

For the above problem, no effective solution has yet been proposed.

## Summary

Embodiments of the present disclosure provide a method and a circuit for implementing a two-qubit gate, a quantum device, and a quantum chip, so as to at least solve the technical problem in the related art of low precision of the two-qubit gate.

According to one aspect of the embodiments of the present disclosure, a method for implementing a two-qubit gate is provided, which includes: applying a first quantum control signal to a first data qubit; applying a second quantum control signal to a second data qubit; and activating, by means of adjusting the first quantum control signal and the second quantum control signal, longitudinal coupling between the first data qubit and the second data qubit within a predetermined time, so as to implement the two-qubit gate.

Optionally, the first quantum control signal and the second quantum control signal are control signals of the same type, and an amplitude of the first quantum control signal is a fixed multiple of the amplitude of the second quantum control signal.

Optionally, the above method further includes: controlling, by means of adjusting the first quantum control signal and the second quantum control signal, other coupling between the first data qubit and the second data qubit to be minimum, where the other coupling is coupling other than the longitudinal coupling.

Optionally, the first data qubit is a first Fluxonium qubit, and the second data qubit is a second Fluxonium qubit.

Optionally, before applying the first quantum control signal to the first data qubit and applying the second quantum control signal to the second data qubit, the method further includes: adjusting the first data qubit and the second data qubit to be in a flux sweet spot state, where the flux sweet spot state is that the decoherence time of the data qubit reaches a maximum value.

Optionally, the first quantum control signal and the second quantum control signal are hyperbolic tangent pulse signals.

According to another aspect of the embodiments of the present disclosure, a circuit for implementing a two-qubit gate is further provided, which includes: a first data qubit, a second data qubit, a first signal generator, a second signal generator, and a signal controller. The first signal generator is configured to generate a first quantum control signal and apply the first quantum control signal to the first data qubit. The second signal generator is configured to generate a second quantum control signal and apply the second quantum control signal to the second data qubit. The signal controller is configured to activate, by means of controlling the first signal generator to adjust the first quantum control signal and controlling the second signal generator to adjust the second quantum control signal, longitudinal coupling between the first data qubit and the second data qubit within a predetermined time, so as to implement the two-qubit gate.

Optionally, the signal controller includes: a scanner and an adjuster. The scanner is configured to scan other coupling between the first data qubit and the second data qubit to obtain other coupling results, where the other coupling is coupling other than the longitudinal coupling. The adjuster is configured to control, by means of controlling the first signal generator to adjust the first quantum control signal and controlling the second signal generator to adjust the second quantum control signal, the other coupling between the first data qubit and the second data qubit to be minimal based on the other coupling results.

Optionally, the first Fluxonium qubit and the second Fluxonium qubit achieve mutual inductance through independent inductors.

Optionally, the first Fluxonium qubit and the second Fluxonium qubit achieve mutual inductance through a shared inductor.

Optionally, the two-qubit gate is a controlled phase CZ gate.

According to another aspect of the embodiments of the present disclosure, a quantum device is further provided, which includes: any above circuit for implementing the two-qubit gate, the circuit being configured to perform a logic gate operation on a target data qubit to be processed in the quantum device.

Optionally, the target data qubit includes a Fluxonium-based qubit.

According to another aspect of the embodiments of the present disclosure, a quantum chip is further provided, which includes: any above circuit for implementing the two-qubit gate, the circuit being configured to perform a logic gate operation on a target data qubit to be processed in the quantum chip.

According to another aspect of the embodiments of the present disclosure, a quantum memory is further provided. The quantum memory stores a data qubit, and the data qubit is obtained by performing a logic gate operation based on any above circuit for implementing the two-qubit gate.

According to another aspect of the embodiments of the present disclosure, a quantum computer is provided, which includes: a quantum memory, a classical memory, and a quantum chip. The quantum memory stores a data qubit. The classical memory stores a program executable by the quantum chip. The quantum chip is configured to read the data qubit from the quantum memory, perform a logic gate operation on the read data qubit to obtain a target qubit, and write the target qubit into the quantum memory. The quantum chip is further configured to run the program stored in the classical memory, thereby implementing any above method for implementing the two-qubit gate.

According to still another aspect of the embodiments of the present disclosure, a quantum computer is provided, which includes: a classical memory and a quantum chip. The classical memory stores a program executable by the quantum chip. The quantum chip is configured to run the program stored in the classical memory, thereby implementing any above method for implementing the two-qubit gate.

In the embodiments of the present disclosure, by means of respectively applying the first quantum control signal and the second quantum control signal to the first data qubit and the second data qubit, and respectively adjusting the first quantum control signal and the second quantum control signal, the coupling between the first data qubit and the second data qubit is mainly the longitudinal coupling, that is, the coupling other than the longitudinal coupling is minimal, and an error of the two-qubit gate under the longitudinal coupling is minimal. At this time, the two-qubit gate may be implemented by utilizing the longitudinal coupling between the first data qubit and the second data qubit, and the error of the two-qubit gate is greatly reduced, thereby achieving the technical effect of improving the precision of the two-qubit gate, and further solving the technical problem in the related art of low precision of the two-qubit gate.

## Brief Description of the Drawings

The drawings described herein are used to provide a further understanding of the present disclosure, and constitute a part of the present disclosure, and the exemplary embodiments of the present disclosure and the description thereof are used to explain the present disclosure, but do not constitute improper limitations to the present disclosure. In the drawings:

Fig. 1 is a flowchart of a method for implementing a two-qubit gate according to an embodiment of the present disclosure.

Fig. 2 is a schematic diagram of a Fluxonium qubit according to an optional implementation of the present disclosure.

Fig. 3 is a schematic diagram of an implementation of a two-qubit gate based on mutual inductance of inductors according to an optional implementation of the present disclosure.

Fig. 4 is a schematic diagram of an implementation of a two-qubit gate based on a shared inductor according to an optional implementation of the present disclosure.

Fig. 5 is a schematic diagram of a two-qubit gate curve according to an optional implementation of the present disclosure.

Fig. 6 is a schematic diagram of an error scanning result of coupling of ZZ type at a high energy level according to an optional implementation of the present disclosure.

Fig. 7 is a schematic diagram of error decomposition in a low-error area according to an optional implementation of the present disclosure.

Fig. 8 is a schematic diagram of a circuit for a method for implementing a two-qubit gate according to an embodiment of the present disclosure.

Fig. 9 is a structural block diagram of a quantum computer according to an embodiment of the present disclosure.

**Detailed Description of the Embodiments**

In order to make the solutions of the present disclosure understood by those skilled in the art, the technical solutions in the embodiments of the present disclosure will be clearly and completely described below in combination with the drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

It is to be noted that terms "first", "second" and the like in the description, claims and the above drawings of the present disclosure are used for distinguishing similar objects rather than describing a specific sequence or a precedence order. It should be understood that the data used in such a way may be exchanged where appropriate, in order that the embodiments of the present disclosure described here may be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

Terminology description

Quantum coherence refers to a state in which different states in a quantum system maintain a definable phase relationship. Quantum coherence is a necessary condition for ensuring that quantum computing is performed correctly.

Qubit: in a classical mechanics system, the state of a bit is unique, while quantum mechanics allows the qubit to be a superposition of two states at the same time, which is the basic property of quantum computing. Physically speaking, the qubit is a quantum state, so that the qubit has the properties of the quantum state. Due to the unique quantum properties of the quantum state, the qubit has many characteristics that are different from a classical bit, which is one of the basic characteristics of quantum information science.

Quantum chip: the so-called quantum chip is to integrate quantum circuits on a substrate, and then carry a function of quantum information processing.

Fluxonium, a superconducting qubit type, consists of a Josephson junction, an inductor, and a capacitor connected in parallel.

Superconducting qubit gate: quantum logic may be completed by a set of single-qubit and two-qubit gates, where a two-qubit logic gate takes two qubits as input, usually the first qubit is a control bit and the second is a target bit, common examples are a controlled NOT gate (CNOT gate) and a controlled phase gate (CZ gate or CPHASE gate). A set of universal single-qubit and two-qubit gates is sufficient to implement an arbitrary quantum logic, and at the same time, each single-qubit gate and each two-qubit gate are reversible, that is, given an output state, an input state may be uniquely determined.

Embodiment 1

According to the embodiments of the present disclosure, a method embodiment for implementing a two-qubit gate is further provided. It is to be noted that although a logical sequence of the steps shown in the flowchart of the drawings is shown in the flowchart, in some cases, the steps shown or described may be executed in a different order than here.

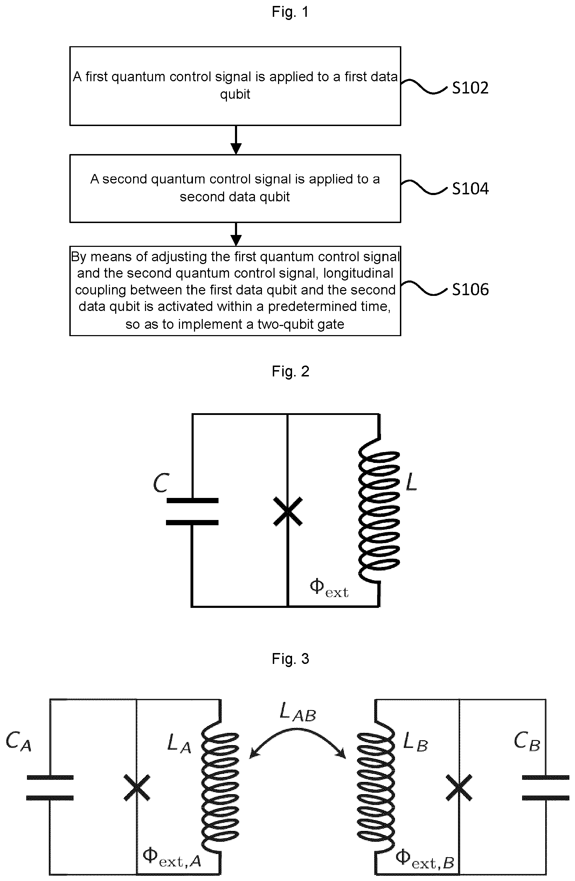

The present disclosure provides a method for implementing a two-qubit gate as shown in Fig. 1. Fig. 1 is a flowchart of a method for implementing a two-qubit gate according to an embodiment of the present disclosure. As shown in Fig. 1, the method includes the following steps.

At S102, a first quantum control signal is applied to a first data qubit.

At S104, a second quantum control signal is applied to a second data qubit.

At S106, by means of adjusting the first quantum control signal and the second quantum control signal, longitudinal coupling between the first data qubit and the second data qubit is activated within a predetermined time, so as to implement the two-qubit gate.

Through the above steps, by means of respectively applying the first quantum control signal and the second quantum control signal to the first data qubit and the second data qubit, and respectively adjusting the first quantum control signal and the second quantum control signal, the coupling between the first data qubit and the second data qubit is mainly the longitudinal coupling, that is, the coupling other than the longitudinal coupling is minimal, and an error of the two-qubit gate under the longitudinal coupling is minimal. At this time, the two-qubit gate may be implemented by utilizing the longitudinal coupling between the first data qubit and the second data qubit, and the error of the two-qubit gate is greatly reduced, thereby achieving the technical effect of improving the precision of the two-qubit gate, and further solving the technical problem in the related art of low precision of the two-qubit gate.

As an optional embodiment, the coupling between the data qubits includes transverse coupling and longitudinal coupling, where the transverse coupling and the longitudinal coupling are described based on a quantization axis of the qubit. The direction of the quantization axis is a direction between a 0 state and a 1 state of the qubit, called a Z axis, and the two-dimensional plane perpendicular to the quantization axis is composed of an X axis and a Y axis. The coupling associated with the Z axis is the longitudinal coupling, and the coupling associated with the X and Y axes is the transverse coupling.

As an optional embodiment, the first quantum control signal and the second quantum control signal may be control signals of the same type, and the amplitude of the first quantum control signal is a fixed multiple of the amplitude of the second quantum control signal. The first quantum control signal and the second quantum control signal are configured to adjust a coupling condition between the first data qubit and the second data qubit, and the first quantum control signal and the second quantum control signal may also be selected and adjusted according to actual needs. For example, the first quantum control signal and the second quantum control signal may be set to the same type, and the amplitude of the first quantum control signal is the fixed multiple of the amplitude of the second quantum control signal. In this case, the fluctuation conditions of the two control signals at the first data qubit and the second data qubit may be considered to be similar or corresponding (for example, the control signals produce peaks and troughs at the same time, frequency, etc.), especially when the amplitudes of the first quantum control signal and the second quantum control signal are also the same, then it may be considered that the fluctuation conditions of the first quantum control signal and the second quantum control signal at their respective corresponding qubits are exactly the same, so that the problem of difficulty in adjustment caused by involving more parameters when using the control signals with large differences may be reduced, which provides great convenience for adjusting the coupling condition between the first data qubit and the second data qubit by using the first quantum control signal and the second quantum control signal, and improves the efficiency of the above adjustment process.

As an optional embodiment, the above method further includes: controlling, by means of adjusting the first quantum control signal and the second quantum control signal, other coupling between the first data qubit and the second data qubit to be minimum, where the other coupling is coupling other than the longitudinal coupling. By means of adjusting the coupling conditions at the first data qubit and the second data qubit by using the first quantum control signal and the second quantum control signal, the coupling other than the longitudinal coupling required for implementing the two-qubit gate is minimal, so as to reduce the interference and error caused by the other coupling to the two-qubit gate.

It is to be noted that when the coupling conditions at the first data qubit and the second data qubit are adjusted by using the first quantum control signal and the second quantum control signal, the following manners may be used: in a case where the fluctuation conditions of the first quantum control signal and the second quantum control signal at the first data qubit and the second data qubit are relatively consistent (for example, the signal types are the same, the amplitude is a fixed multiple relationship, etc.), by means of controlling variables by using the two control signals, only one parameter is adjusted each time, so that the final signal meets the predetermined requirements. At the same time, in the adjustment process, by means of respectively determining the relationship between each other coupling that causes the interference or error and the signal, in a case where it is ensured that the determined error relationship is relatively independent based on its corresponding coupling, the error generated thereby may be reduced according to the determined correspondence between the other coupling and the error. In addition, since the error caused by quantum energy level transition is relatively independent, in the process of adjusting the first quantum control signal and the second quantum control signal, the error caused by quantum energy level transition may also be considered to achieve a better signal control effect.

As an optional embodiment, the first data qubit may be a first Fluxonium qubit, and the second data qubit may be a second Fluxonium qubit. The Fluxonium qubit has the characteristics of long coherence time and flexible operation. By using the Fluxonium qubit as the first data qubit and the second data qubit in the above solution, the above characteristics of long coherence time and flexible operation of the Fluxonium qubit may be brought into play in the quantum computation of the two-qubit gate, so that the two-qubit gate achieves the computational effect of high-precision quantum computation.

As an optional embodiment, before applying the first quantum control signal to the first data qubit and applying the second quantum control signal to the second data qubit, the method further includes: adjusting the first data qubit and the second data qubit to be in a flux sweet spot state, where the flux sweet spot state is that the decoherence time of the data qubit reaches a maximum value. When the first data qubit and the second data qubit are both adjusted to be in the flux sweet spot state, that is, the decoherence time of the data qubit in the current state reaches the maximum value, that is, the time from a coherence state to the loss of coherence of the first data qubit and the second data qubit reaches the longest.

On the one hand, the sufficiently long decoherence time means that the two-qubit gate has a longer time to complete the computation before decoherence, and on the other hand, when the first data qubit and the second data qubit are both in the flux sweet spot state, values of phases in a diagonal matrix corresponding to the two-qubit gate are all zero, that is, the coupling between the two qubits is only the transverse coupling, so that the relationship between the control signal and the error caused by the transverse coupling may be accurately obtained in this state. In addition, when the first data qubit and the second data qubit are not in the flux sweet spot state, the coupling between the two qubits includes the longitudinal coupling and the other coupling, where the other coupling further includes the transverse coupling, that is, after the relationship between the control signal and the error caused by the transverse coupling is determined, the first data qubit and the second data qubit may be adjusted to be in a non-flux sweet spot state, so as to retain the longitudinal coupling between the two data qubits and determine the relationship between the control signal and the error caused by the other coupling.

As an optional embodiment, the first quantum control signal and the second quantum control signal are hyperbolic tangent pulse signals. There are many options for the control signal, and in this embodiment, the hyperbolic tangent pulse is only used as one optional pulse signal for illustration.

Based on the above embodiments and optional embodiments, the present disclosure provides an optional implementation, which is described below.

The Fluxonium qubit is a superconducting qubit with long coherence time and strong operability, and the characteristics of long coherence time and strong operability make the Fluxonium qubit have the potential for forming a high-precision two-qubit gate, which is a crucial part of superconducting quantum computation.

In the related art, there is a technical solution for performing Fluxonium qubit coupling by using a capacitor. However, under this solution, although the Fluxonium qubit has longer coherence time at low frequencies, the charge coupling between the two Fluxonium qubits in this process is too small, which makes the gate computation time of the two-qubit gate relatively longer, and this is equivalent to completely offsetting the advantages that the use of the Fluxonium qubit could originally bring.

However, inductive coupling is different from capacitive coupling. When the inductor is used for Fluxonium qubit coupling, the Fluxonium qubit has longer coherence time at low frequencies, and the coupling between the two Fluxonium qubits in this process is also large enough. Based on this, an optional implementation of the present disclosure provides the method for implementing the two-qubit gate by using the inductive coupling.

First, the Fluxonium qubit is introduced. Fig. 2 is a schematic diagram of a Fluxonium qubit according to an optional implementation of the present disclosure. As shown in Fig. 2, the Fluxonium qubit is composed of a Josephson junction, a capacitor, and an inductor connected in parallel. A Hamiltonian equation corresponding to the Fluxonium qubit is as follows:

$$h = 4E_C n^2 - E_J COS\varphi + \frac{1}{2}E_L \left( \varphi + \phi_{ext}^2 \right)$$

Where the energy E of the Fluxonium qubit may be calculated by the diagonalized Hamiltonian equation, $n$ represents the charge, $\varphi$ represents the phase, $E_C$ is the energy of the capacitor, $E_J$ is the energy of the Josephson junction, $E_L$ is the energy of the inductor, and $\phi_{ext}$ is the external magnetic flux.

When $\phi_{ext} = \pi$, the Fluxonium qubit is in the flux sweet spot state, which means $\frac{\delta_{\omega_{01}}}{\delta_{\phi_{ext}}} = 0$ and $\omega_{01}$ reaches the minimum value, while the decoherence time $T_2$ reaches the maximum value.

A method for implementing a high-precision two-qubit gate according to an optional implementation of the present disclosure is described below.

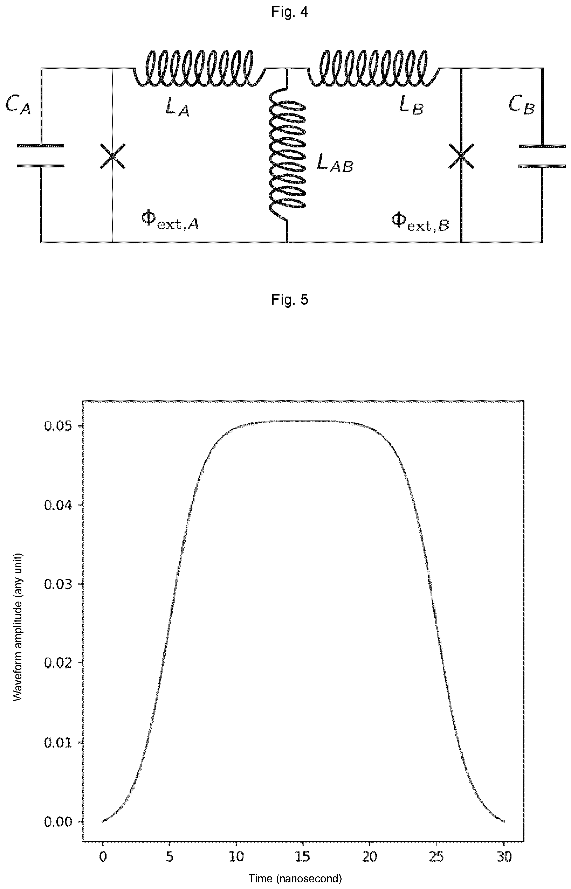

Fig. 3 is a schematic diagram of an implementation of a two-qubit gate based on mutual inductance of inductors according to an optional implementation of the present disclosure. Fig. 4 is a schematic diagram of an implementation of a two-qubit gate based on a shared inductor according to an optional implementation of the present disclosure. As shown in Fig. 3 and Fig. 4, in an optional embodiment of the present disclosure, the two-qubit gate may perform coupling between the two qubits by mutual inductance of the inductors, or achieve the construction of the two-qubit gate by the two qubits sharing the common inductor.

After the circuit is determined by any above implementation of the two-qubit gate, the Hamiltonian equation of the Fluxonium qubit coupled by inductance may be determined as follows:

$$h = h_A + h_B + h_{AB}$$
$$= \sum_{i=A,B} \left[ 4E_{C,i}n_i^2 - E_{J,i}\cos\varphi_i + \frac{1}{2}E_{L,i}\left(\varphi_i + \phi_{ext,i}\right)^2 \right]$$
$$- J_L\left(\varphi_A - \phi_{ext,A}\right)\left(\varphi_B - \phi_{ext,B}\right)$$

When the two Fluxonium qubits are in the flux sweet spot state, $\varphi_A$ and $\varphi_B$ are both 0 in the diagonal matrix, so that only the transverse (XX) coupling between the qubits exits at this time. When the two Fluxonium qubits are not in the flux sweet spot state, elements in the diagonal matrix are non-zero values, and there are various types of coupling (XX, ZX, ZZ) between the qubits. The corresponding Hamiltonian equation in this case is as follows:

$$H\left(\phi_{ext,A}, \phi_{ext,B}\right)$$
$$= \frac{1}{2}\omega_A\left(\phi_{ext,A}\right)\sigma_{Z,A} + \frac{1}{2}\omega_B\left(\phi_{ext,B}\right)\sigma_{Z,B} + \lambda_{XX}\sigma_{XX} + \lambda_{ZX}\sigma_{ZX} + \lambda_{XZ}\sigma_{XZ}$$
$$+ \lambda_{ZZ}\sigma_{ZZ}$$

Where $\omega_A$ and $\omega_B$ are the energies of the qubit A and qubit B when the energy level changes between 0 and 1, respectively. The Hamiltonian may be summarized as follows when changing with time:

$$U = \exp\left(-iH(t)t\right)$$

The optional implementation of the present disclosure adopts $\sigma_{ZZ}$ to implement the two-qubit gate. Fig. 5 is a schematic diagram of a two-qubit gate pulse waveform curve according to an optional implementation of the present disclosure. As shown in Fig. 5, in order to ensure thermal insulation, the pulse waveform curve needs to be a smooth curve. In the optional implementation of the present disclosure, taking the hyperbolic tangent pulse as an example, pulses of the same shape are selected at the two Fluxonium qubits, so as to reduce the number of parameters involved in the optimization process of the two-qubit gate and improve the optimization efficiency.
At the same time, except for the coupling of ZZ type required to construct the two-qubit gate, other types of coupling, namely XX, XZ, and ZX, may cause the errors, but the errors caused thereby are relatively independent, which may be specifically expressed as follows (the errors caused by X and Y are of the same nature, without loss of generality, only X is taken as an example here):

$$ZX \rightarrow \lambda_{ZX}^2 / \omega_B$$

$$XZ \rightarrow \lambda_{XZ}^2 / \omega_A$$

$$XX \rightarrow \lambda_{XX}^2 / (\omega_A + \omega_B)$$

$$XX \rightarrow \lambda_{XX}^2 / (\omega_A - \omega_B)$$

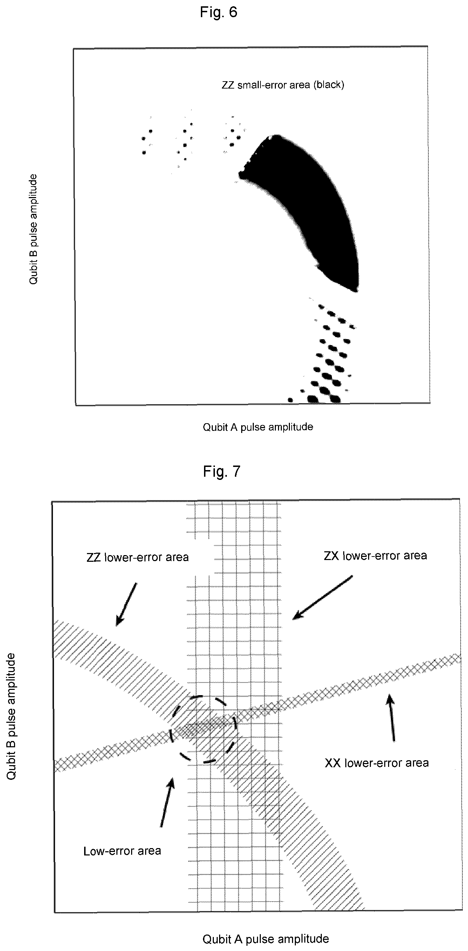

In an optional embodiment of the present disclosure, $\omega_A$, $\omega_B > 1.2\,z$, $|\omega_A - \omega_B| < 0.6\,z$, therefore, the main error in the two-qubit gate comes from the coupling of XX type.
In addition to the errors caused at energy level 0 and energy level 1, the optional implementation of the present disclosure also takes into account the error of the qubit at a high energy level. Fig. 6 is a schematic diagram of an error scanning result of coupling of ZZ type at a high energy level according to an optional implementation of the present disclosure. As shown in Fig. 6, there is a relatively obvious arc-shaped low-error area in the upper right part of Fig. 6, and there are very obvious strip-shaped or mesh-shaped high-error areas in other areas caused by the energy level transition, etc. The optional implementation of the present disclosure adjusts the two-qubit gate according to the above low-error area, so as to avoid the error caused by qubit energy level transition.
Fig. 7 is a schematic diagram of error decomposition in a low-error area according to an optional implementation of the present disclosure. As shown in Fig. 7, after the two-qubit gate is adjusted based on the independently determined error according to the aforementioned method, in the low-error area of the two-qubit gate as shown in the figure, the errors caused by the coupling of ZZ, XX, and ZX types are very small, and the influence on the computational accuracy of the two-qubit gate may be ignored. The error of the two-qubit gate obtained by the above method may be reduced to $5 \times 10^{-4}$.

It is to be noted that, for simple description, each of the above method embodiments is expressed as a combination of a series of operations, but those skilled in the art should know that the present disclosure is not limited to the described operation sequence because some steps may be executed in other sequences or at the same time according to the present disclosure. Second, those skilled in the art should also know that all the embodiments described in the specification are optional embodiments and involved operations and modules are not always required by the present disclosure.

Through the above description of implementations, those skilled in the art may clearly know that the method for implementing the two-qubit gate according to the above embodiments may be implemented by means of software plus a necessary common hardware platform, certainly by means of hardware; but in many cases, the former is the better implementation. Based on such understanding, the technical solution of the present disclosure, which is essential or contributes to the conventional art, may be embodied in the form of a software product. The computer software product is stored in a storage medium (such as a Read-Only Memory (ROM)/Random Access Memory (RAM), a magnetic disk and an optical disc), including a number of instructions for causing a terminal device (which may be a mobile phone, a computer, a server, or a network device, etc.) to perform the methods described in various embodiments of the present disclosure.

Embodiment 2

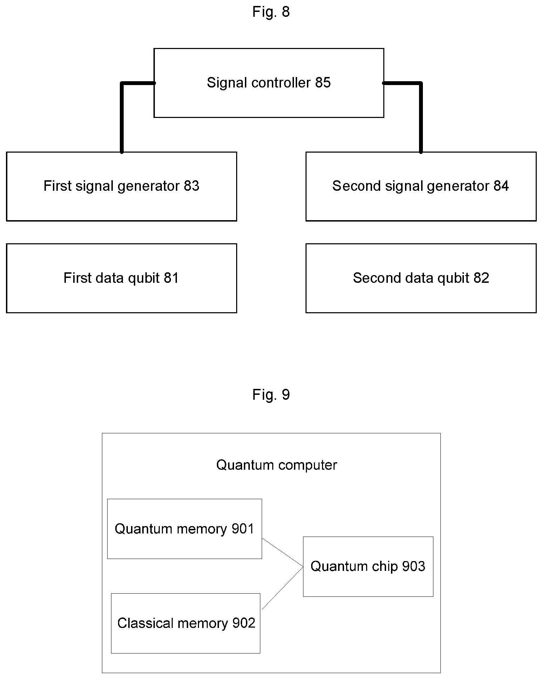

According to the embodiments of the present disclosure, a circuit for implementing the above method for implementing the two-qubit gate is further provided. Fig. 8 is a schematic diagram of a circuit for a method for implementing a two-qubit gate according to an embodiment of the present disclosure. As shown in Fig. 8, the circuit includes: a first data qubit 81, a second data qubit 82, a first signal generator 83, a second signal generator 84, and a signal controller 85. The first signal generator 83 is configured to generate a first quantum control signal and apply the first quantum control signal to the first data qubit. The second signal generator 84 is configured to generate a second quantum control signal and apply the second quantum control signal to the second data qubit. The signal controller 85 is configured to activate, by means of controlling the first signal generator to adjust the first quantum control signal and controlling the second signal generator to adjust the second quantum control signal, longitudinal coupling between the first data qubit and the second data qubit within a predetermined time, so as to implement the two-qubit gate.

As an optional embodiment, the first quantum control signal and the second quantum control signal are control signals of the same type, and the amplitude of the first quantum control signal is a fixed multiple of the amplitude of the second quantum control signal.

As an optional embodiment, the signal controller includes: a scanner and an adjuster. The scanner is configured to scan other coupling between the first data qubit and the second data qubit to obtain other coupling results, where the other coupling is coupling other than the longitudinal coupling. The adjuster is configured to control, by means of controlling the first signal generator to adjust the first quantum control signal and controlling the second signal generator to adjust the second quantum control signal, the other coupling between the first data qubit and the second data qubit to be minimal based on the other coupling results.

As an optional embodiment, the first quantum control signal and the second quantum control signal are hyperbolic tangent pulse signals.

As an optional embodiment, the first data qubit is a first Fluxonium qubit, and the second data qubit is a second Fluxonium qubit.

As an optional embodiment, the first Fluxonium qubit and the second Fluxonium qubit achieve mutual inductance through independent inductors.

As an optional embodiment, the first Fluxonium qubit and the second Fluxonium qubit achieve mutual inductance through a shared inductor.

As an optional embodiment, the two-qubit gate is a controlled phase CZ gate.

According to the embodiments of the present disclosure, a quantum device is further provided, which includes: any above circuit for implementing the two-qubit gate, the circuit being configured to perform a logic gate operation on a target data qubit to be processed in the quantum device.

As an optional embodiment, the target data qubit includes a Fluxonium-based qubit.

According to the embodiments of the present disclosure, a quantum chip is further provided, which includes: any above circuit for implementing the two-qubit gate, the circuit being configured to perform a logic gate operation on a target data qubit to be processed in the quantum chip.

As an optional embodiment, the target data qubit includes a Fluxonium qubit.

According to the embodiments of the present disclosure, a quantum memory is further provided. The quantum memory stores a data qubit, and a data qubit is obtained by performing a logic gate operation based on any above circuit for implementing the two-qubit gate.

The embodiments of the present disclosure may further provide a quantum computer, which may be any quantum computer device in a quantum computer group.

Optionally, Fig. 9 is a structural block diagram of a quantum computer according to an embodiment of the present disclosure. As shown in Fig. 9, the quantum computer may include: a quantum memory 901, a classical memory 902, and a quantum chip 903. The quantum memory stores a data qubit. The classical memory stores a program executable by the quantum chip. The quantum chip is configured to read the data qubit from the quantum memory, perform a logic gate operation on the read data qubit to obtain a target qubit, and write the target qubit into the quantum memory. The quantum chip is further configured to run the program stored in the classical memory, thereby implementing any above method for implementing the two-qubit gate. It is to be noted that the classical memory referred to above is relative to the quantum memory, that is, the memory usually referred to.

Optionally, the embodiments of the present disclosure further provide another quantum computer, which may include: a classical memory and a quantum chip.

The classical memory stores a program executable by the quantum chip. The quantum chip is configured to run the program stored in the classical memory, thereby implementing any above method for implementing the two-qubit gate.

By adopting the embodiments of the present disclosure, by means of respectively applying the first quantum control signal and the second quantum control signal to the first data qubit and the second data qubit, and respectively adjusting the first quantum control signal and the second quantum control signal, the coupling between the first data qubit and the second data qubit is mainly the longitudinal coupling, that is, the coupling other than the longitudinal coupling is minimal, and an error of the two-qubit gate under the longitudinal coupling is minimal. At this time, the two-qubit gate may be implemented by utilizing the longitudinal coupling between the first data qubit and the second data qubit, and the error of the two-qubit gate is greatly reduced, thereby achieving the technical effect of improving the precision of the two-qubit gate, and further solving the technical problem in the related art of low precision of the two-qubit gate.

Those of ordinary skill in the art may understand that the structure shown in Fig. 9 is only schematic and not intended to limit the above structure. For example, the quantum computer may further include more or fewer components than shown in Fig. 9, or has a different configuration from that shown in Fig. 9.

Those of ordinary skill in the art should know that all or part of the steps in various methods of the above embodiment may be implemented by terminal device related hardware instructed through a program, the program may be stored in a computer-readable storage medium, and the storage program may include: a flash disk, an ROM, an RAM, a magnetic disk or a compact disc.

In the several embodiments provided in the present disclosure, it should be understood that, the disclosed technical content may be implemented in other ways. The apparatus embodiments described above are merely illustrative. For example, the division of the units is merely a logical function division, and there may be other divisions in actual implementation. For example, a plurality of units or components may be combined or integrated into another system, or some features can be ignored, or not implemented. In addition, the displayed or discussed mutual coupling or direct coupling or communication connection may be indirect coupling or communication connection through some interfaces, units or modules, and may be in electrical or other forms. The units described as separate components may or may not be physically separated.

The units described as separate components may or may not be physically separated. The components displayed as units may or may not be physical units, that is, the components may be located in one place, or may be distributed on the plurality of network units. Part or all of the units may be selected according to actual requirements to achieve the purposes of the solutions of this embodiment.

In addition, the functional units in the various embodiments of the present disclosure may be integrated into one processing unit, or each unit may exist alone physically, or two or more than two units may be integrated into one unit. The above integrated unit may be implemented in the form of hardware, or may be implemented in the form of a software functional unit.

If the integrated unit is implemented in the form of the software functional unit and sold or used as an independent product, it can be stored in the computer readable storage medium. Based on this understanding, the technical solutions of the present disclosure essentially or the parts that contribute to the prior art, or all or part of the technical solutions may be embodied in the form of a software product. The computer software product is stored in a storage medium, including a plurality of instructions for causing a computer device (which may be a personal computer, a server, or a network device, and the like) to execute all or part of the steps of the method described in the various embodiments of the present disclosure. The foregoing storage medium includes a USB flash disk, an ROM, an RAM, and various media that may store program codes, such as a mobile hard disk, a magnetic disk, or an optical disk.

The above description is merely preferred implementation of the present disclosure, and it is to be noted that those of ordinary skill in the art may also make several improvements and refinements without departing from the principle of the present disclosure, and it should be considered that these improvements and refinements shall all fall within the scope of protection of the present disclosure.

**Claims**

1. A method for implementing a two-qubit gate, comprising:

   applying a first quantum control signal to a first data qubit;
   applying a second quantum control signal to a second data qubit; and
   activating, by means of adjusting the first quantum control signal and the second quantum control signal, longitudinal coupling between the first data qubit and the second data qubit within a predetermined time, so as to implement the two-qubit gate.

2. The method as claimed in claim 1, wherein the first quantum control signal and the second quantum control signal are control signals of the same type, and an amplitude of the first quantum control signal is a fixed multiple of an amplitude of the second quantum control signal.

3. The method as claimed in claim 1, further comprising:
   controlling, by means of adjusting the first quantum control signal and the second quantum control signal, other coupling between the first data qubit and the second data qubit to be minimum, wherein the other coupling is coupling other than the longitudinal coupling.

4. The method as claimed in claim 1, wherein the first data qubit is a first Fluxonium qubit, and the second data qubit is a second Fluxonium qubit.

5. The method as claimed in claim 4, wherein before applying the first quantum control signal to the first data qubit and applying the second quantum control signal to the second data qubit, the method further comprises:
   adjusting the first data qubit and the second data qubit to be in a flux sweet spot state, wherein the flux sweet spot state is that decoherence time of a data qubit reaches a maximum value.

6. The method as claimed in any one of claims 1 to 5, wherein the first quantum control signal and the second quantum control signal are hyperbolic tangent pulse signals.

7. A circuit for implementing a two-qubit gate, comprising: a first data qubit, a second data qubit, a first signal generator, a second signal generator, and a signal controller, wherein,

   the first signal generator is configured to generate a first quantum control signal and apply the first quantum control signal to the first data qubit;
   the second signal generator is configured to generate a second quantum control signal and apply the second quantum control signal to the second data qubit; and
   the signal controller is configured to activate, by means of controlling the first signal generator to adjust the first quantum control signal and controlling the second signal generator to adjust the second quantum control signal, longitudinal coupling between the first data qubit and the second data qubit within a predetermined time, so as to implement the two-qubit gate.

8. The circuit as claimed in claim 7, wherein the signal controller comprises: a scanner and an adjuster, wherein,

   the scanner is configured to scan other coupling between the first data qubit and the second data qubit to obtain other coupling results, wherein the other coupling is coupling other than the longitudinal coupling; and
   the adjuster is configured to control, by means of controlling the first signal generator to adjust the first quantum control signal and controlling the second signal generator to adjust the second quantum control signal, the other coupling between the first data qubit and the second data qubit to be minimal based on the other coupling results.

9. The circuit as claimed in claim 7, wherein the first data qubit is a first Fluxonium qubit, and the second data qubit is a second Fluxonium qubit.

10. The circuit as claimed in claim 9, wherein the first Fluxonium qubit and the second Fluxonium qubit achieve mutual inductance through independent inductors.

11. The circuit as claimed in claim 9, wherein the first Fluxonium qubit and the second Fluxonium qubit achieve mutual inductance through a shared inductor.

12. The circuit as claimed in any one of claims 7 to 11, wherein the two-qubit gate is a controlled phase CZ gate.

13. A quantum device, comprising the circuit for implementing the two-qubit gate as claimed in any one of claims 7 to 12, the circuit being configured to perform a logic gate operation on a target data qubit to be processed in the quantum device.

14. A quantum chip, comprising the circuit for implementing the two-qubit gate as claimed in any one of claims 7 to 12, the circuit being configured to perform a logic gate operation on a target data qubit to be processed in the quantum chip.

Fig. 1

A first quantum control signal is applied to a first data qubit ⟶ S102

A second quantum control signal is applied to a second data qubit ⟶ S104

By means of adjusting the first quantum control signal and the second quantum control signal, longitudinal coupling between the first data qubit and the second data qubit is activated within a predetermined time, so as to implement a two-qubit gate ⟶ S106

Fig. 2

$C$    $L$

$\Phi_{\text{ext}}$

Fig. 3

$C_A$    $L_A$    $L_{AB}$    $L_B$    $C_B$

$\Phi_{\text{ext},A}$    $\Phi_{\text{ext},B}$

Fig. 4

Fig. 5

Fig. 6

ZZ small-error area (black)

Qubit B pulse amplitude

Qubit A pulse amplitude

Fig. 7

ZZ lower-error area

ZX lower-error area

XX lower-error area

Low-error area

Qubit B pulse amplitude

Qubit A pulse amplitude

Fig. 8

| | |
|---|---|
| | Signal controller 85 | |

| First signal generator 83 | Second signal generator 84 |
|---|---|

| First data qubit 81 | Second data qubit 82 |
|---|---|

Fig. 9

Quantum computer

| Quantum memory 901 | |
|---|---|

Quantum chip 903

| Classical memory 902 |
|---|

## INTERNATIONAL SEARCH REPORT

International application No.

**PCT/CN2023/108851**

| A. | CLASSIFICATION OF SUBJECT MATTER |
| --- | --- |

G06N 10/60(2022.01)i;  G06N 10/40(2022.01)i

According to International Patent Classification (IPC) or to both national classification and IPC

| B. | FIELDS SEARCHED |
| --- | --- |

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 量子位, 控制, 信号, 纵向, 耦合, 门, 数据, qubit, control, signal, quantum, gate, data

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115293356 A (ALIBABA DAMOYUAN (HANGZHOU) TECHNOLOGY CO., LTD.) 04 November 2022 (2022-11-04)<br>claims 1-14 | 1-14 |
| X | US 2021408113 A1 (INTERNATIONAL BUSINESS MACHINES CORP.) 30 December 2021 (2021-12-30)<br>description, paragraphs 27-92, and figures 1-10 | 1, 4, 6, 7, 9-14 |
| A | CN 111260066 A (TSINGHUA UNIVERSITY) 09 June 2020 (2020-06-09)<br>entire document | 1-14 |
| A | US 2017262765 A1 (SOCPRA SCIENCES ET GÉNIE S.E.C.) 14 September 2017 (2017-09-14)<br>entire document | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2023** | **23 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/108851**

| Patent document cited in search report | | | Publication date (day/month/year) | Patent family member(s) | | | Publication date (day/month/year) |
|---|---|---|---|---|---|---|---|
| CN | 115293356 | A | 04 November 2022 | None | | | |
| US | 2021408113 | A1 | 30 December 2021 | CA | 3180256 | A1 | 06 January 2022 |
| | | | | WO | 2022002944 | A1 | 06 January 2022 |
| | | | | IL | 298514 | A | 01 January 2023 |
| | | | | JP | 2023531861 | A | 26 July 2023 |
| | | | | AU | 2021299948 | A1 | 10 November 2022 |
| | | | | EP | 4172880 | A1 | 03 May 2023 |
| | | | | KR | 20230006013 | A | 10 January 2023 |
| | | | | US | 2023172078 | A1 | 01 June 2023 |
| | | | | IN | 202247068264 | A | 09 December 2022 |
| | | | | CN | 115699035 | A | 03 February 2023 |
| CN | 111260066 | A | 09 June 2020 | None | | | |
| US | 2017262765 | A1 | 14 September 2017 | CA | 3010686 | A1 | 14 September 2017 |
| | | | | WO | 2017152287 | A1 | 14 September 2017 |
| | | | | US | 2019005403 | A1 | 03 January 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210878011